# EUROPEAN PATENT APPLICATION

(11) **EP 1 522 422 A1**
(43) Date of publication of application: **13.04.2005**
(21) Application number: 04023662.2
(22) Date of filing: 05.10.2004
(51) Int. Cl.: B60B 33/00

(54) **Castor wheel particularly for use in environments affected by hair and thread elements in general**

(30) Priority: 06.10.2003 IT mi20030463 U
(71) Applicant: O.G.T.M. Officine Meccaniche S.r.l., 26866 S. Angelo Lodigiano (Lodi) (IT)
(72) Inventor: Trivini, Ruggero, 26866 S.Angelo Lodigiano Lodi (IT)
(74) Representative: Cicogna, Franco

(57) **Abstract**

The present invention relates to a castor wheel (1) specifically designed for environments on the floor of which hair and thread like elements in general are accumulated, which castor wheel (1) comprises a vertically extending end-piece (2) for coupling to a body on which the castor wheel is applied.

From the end-piece a fork element (3) for supporting a wheel rotary horizontal pin (5) extends.

The main feature of the invention is that on each leg (4) of the fork (3) is formed a seat (10) including coupling means for removably snap coupling the end portions (16) of the pin.

## Description

### BACKGROUND OF THE INVENTION

The present invention relates to a castor wheel which has been specifically designed for use in environments affected by hair and thread-like elements in general.

As is known, castor wheels, in a most typical configuration thereof, comprise a vertically extending end-piece, to which a fork is coupled, having fork arms or legs therebetween a wheel turning about a substantially horizontal axis is rotatably supported.

By using such a castor wheel in an environment the floor of which is affected by hair, thread-like elements and the like, such as, for example, in hair processing shops and the like, the hair is inevitably collected by the castor wheel as the latter turns, thereby winding about the castor wheel pivot pin, to undesirably brake the latter.

At present, cleaning operations for removing hair from castor wheel rotary pins are very difficult and complex, since the region of the pivot pin is difficultly accessible.

Thus, it is possible to perform only a partial cleaning, thereby the wheel, in the time, is seriously damaged.

### SUMMARY OF THE INVENTION

Accordingly, the aim of the present invention is to overcome the above mentioned problem, by providing a castor wheel specifically designed for use in environments affected by hair and thread-like elements in general, which can be quickly and easily cleaned, without the need of use specifically designed cleaning tools.

Within the scope of the above mentioned aim, a main object of the present invention is to provide such a castor wheel the wheel rotary pivot pin of which can be always held in a perfectly cleaned condition, by performing a simple periodical maintenance operation for quickly removing hair and the like.

Yet another object of the present invention is to provide such a castor wheel which is very reliable and safe in operation.

Yet another object of the present invention is to provide such a castor wheel, specifically designed for use in environments affected by hair and thread-like elements in general, which can be easily made and which, moreover, is very competitive from a mere economic standpoint.

According to one aspect of the present invention, the above mentioned aim and objects, as well as yet other objects, which will become more apparent hereinafter, are achieved by a castor wheel, specifically designed for use in environments affected by hair and thread-like elements in general, said castor wheel comprising a vertically connecting end-piece for connecting to a body to which the wheel is applied, from said end piece extending a fork element for supporting a horizontal rotary pin for said wheel, and being characterized in that said castor wheel further comprises, on each leg of said fork, a seat including coupling means for removably snap coupling the end portion of said pin.

### BRIEF DESCRIPTION OF THE DRAWINGS

Further characteristics and advantages of the present invention will become more apparent hereinafter from the following detailed disclosure of a castor wheel, specifically designed for use in environments affected by hair and thread-like elements in general, which is illustrated, by way of an indicative, but not limitative, example in the accompanying drawings, where:

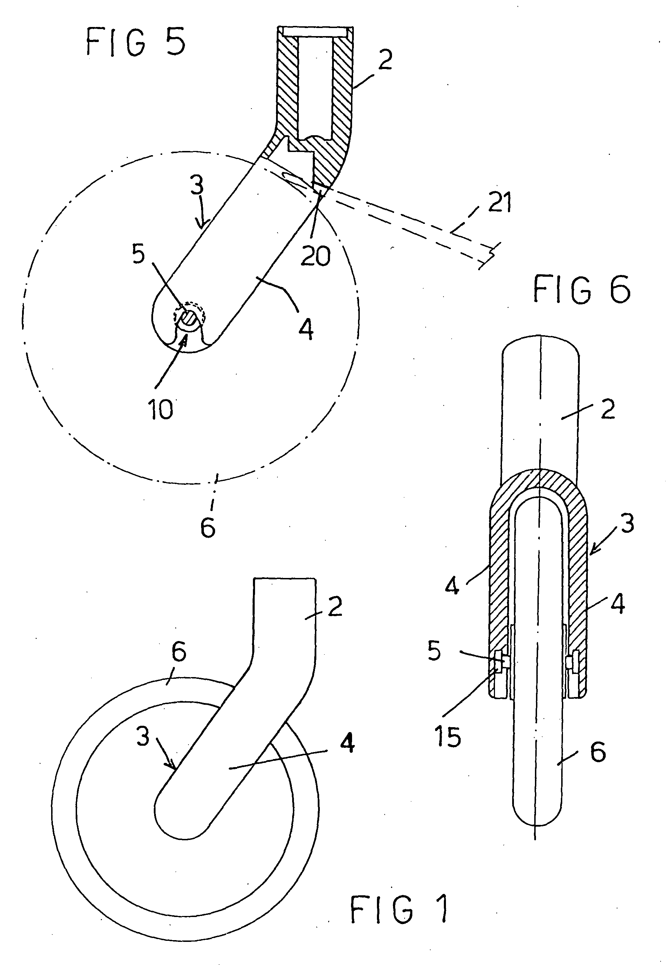

Figure 1 is a schematic side elevation view illustrating the castor wheel;

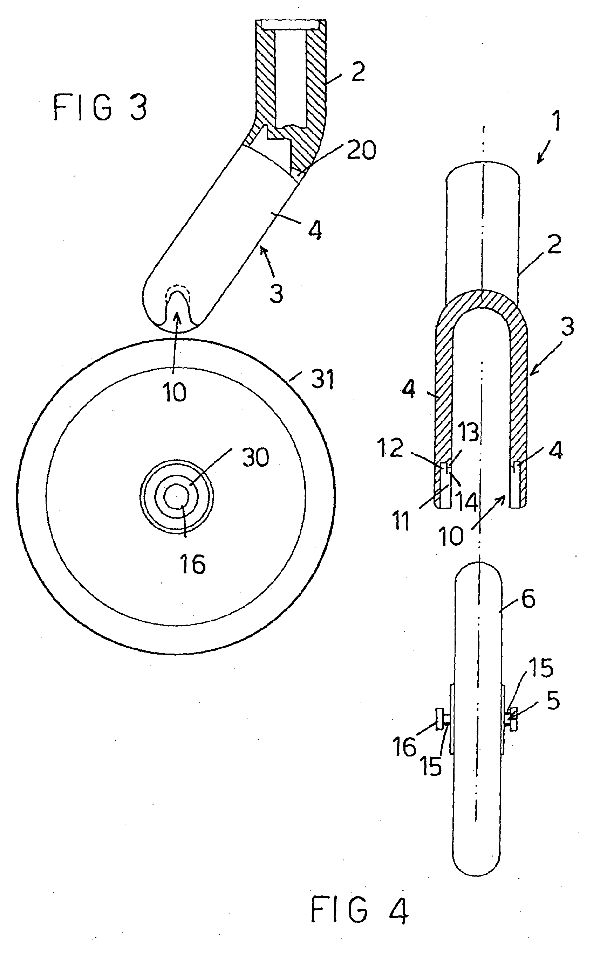

Figure 2 is a front elevation view illustrating the castor wheel;
Figure 3 is a further exploded and partially cross-sectioned front elevation view illustrating the castor wheel;
Figure 4 is a further front elevation view illustrating the castor wheel as seen in cross-section and in exploded form;

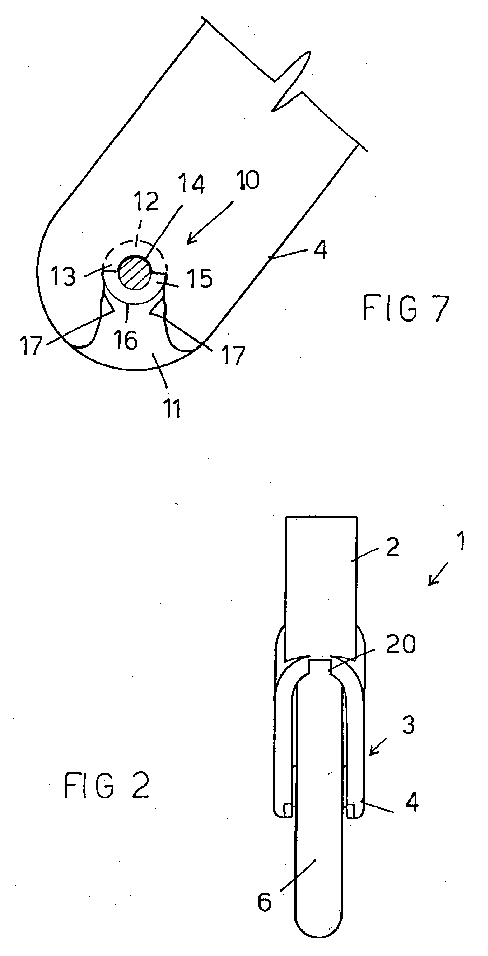

Figure 5 is a partially cross-sectional view illustrating the castor wheel in an assembled condition thereof;
Figure 6 is a front cross-sectional view illustrating the castor wheel in an assembled condition thereof; and
Figure 7 illustrates, on an enlarged scale, a detail showing a coupling seat for the pivot or rotary pin.

### DESCRIPTION OF THE PREFERRED EMBODIMENTS

With reference to the number references of the above mentioned figures, the castor wheel, specifically designed for environments on the floors of which are present hair and thread-like elements in general, according to the present invention, which has been generally indicated by the reference number 1, comprises a vertically extending end-piece 2, defining a vertical seat or recess 3 for coupling it to a wheel supporting body.

At the other end portion thereof, the end-piece is coupled to a fork element 3 including two adjoining arms or legs 4 extending according to a set slanted attitude, with respect to the axis of the end-piece 2, thereby providing an end portion for coupling with the rotary pin 5 of the wheel 6, which is arranged in an offset relationship with respect to the end-piece 2 axis.

The main feature of the invention is that the pivot or rotary pin 5 is engaged with a seat 10, defined on each of the two legs 4 of the fork, and including means for removably snap engaging the end of the pin therein.

More specifically, said seat 10 is arranged on the bottom of a tapering portion 11, which tapers toward the bottom end portion of the fork leg 4, and ends at a recess or notch 12.

The latter is defined by a small wall 13 defining a semi-circular cut-out 14 being housed in a groove 15 defined in the pivot pin 5.

Thus, it should be apparent that the assembled fork 3 cannot be laterally opened upon loading.

As shown, the pivot or rotary pin 5 is provided with an end portion 16 engaging in said notch 12 through snap coupling means, formed by opposite projections 17 formed in the tapering portion 11.

Thus, by providing a comparatively small pressure, it is possible to engage the end portions 16 of the pivot pin in the notch 12, by overcoming the resilient biassing provided by the projections 17 which, the pivot pin being passed through, will held it removably in its desired position, while preventing it from being accidentally disengaged.

To remove the wheel, at the 'bridge portion coupling the two legs 4 of the fork, is provided a cut-away portion 20 adapted for introducing thereinto a lever or rod-like element 21 which, by acting on the wheel peripheral portion, will allow to easily remove the wheel by disengaging the pivot pin from its seat.

Thus, it would be possible to easily access the pin for fully cleaning it, by removing hair and thread elements therefrom.

As shown, said pivot pin is rotatably engaged in the hub 30 of the wheel 6, thereby it is possible to unthread or remove said pin, to allow a full removal of the hair, thread elements or the like accidentally wound about the pin.

From the above disclosure it should be apparent that the invention fully achieves the intended aim and objects.

In particular, the fact is to be pointed out that the castor wheel according to the present invention, which can be easily and quickly removed for cleaning the pivot pin, allows to be used in environments the floor of which is affected by hair, thread like elements and the like.

In particular, the wheel can be simply removed by using a lever, thereby the user can continuously and simply service the wheel.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes can be any, depending on requirements.

## Claims

1. A castor wheel, specifically designed for use in environments affected by hair and thread-like element in general, said castor wheel comprising a vertically connecting end-piece for connecting to a body to which the wheel is applied, from said end piece extending a fork element for supporting a horizontal rotary pin for said wheel, and being **characterized in that** said castor wheel further comprises, on each leg of said fork, a seat including coupling means for removably snap coupling the end portion of said pin.

2. A castor wheel, according to the preceding claim, **characterized in that** said legs of said fork are slanted with respect to the axial extension of said end-piece, and that said seat is offset from the end-piece axis.

3. A castor wheel, according to the preceding claims, **characterized in that** said seat is defined at the end of a tapering portion which tapers at a bottom of each said leg, and that said seat is delimited by a wall defining a notch for engaging therein the end of the pin.

4. A castor wheel, according to one or more of the preceding claims, **characterized in that** said wall comprises a semicircular cut-out for engaging with a pin groove.

5. A castor wheel, according to one or more of the preceding claims, **characterized in that** said snap removable coupling means for removably snap coupling the end of said pin comprise projections defined on opposite edges of said tapering portion and engageable with the end of said pin for allowing said pin to be engaged by a resilient engaging, and to hold said pin in a set position thereof.

6. A castor wheel, according to one or more of the preceding claims, **characterized in that** said castor wheel further comprises, on a bridge portion coupling said arms or legs of said fork, a cut-away portion for engaging with a rod or lever element, to remove said pin from its seat.

7. A castor wheel, according to one or more of the preceding claims, **characterized in that** said pin is rotatably engaged with a hub of said wheel.

8. A castor wheel, according to one or more of the preceding claims, **characterized in that** said castor wheel further comprises a wall engaging in a groove defined on the wheel pin.

9. A castor wheel, according to one or more of the preceding claims, **characterized in that** said wall, in its condition engaged in said groove of said pin, prevents said fork from laterally opening under loading.

10. A castor wheel, specifically designed for environments on the floors thereof are collected hair and thread like elements in general, according to one or more of the preceding claims, and substantially as broadly disclosed and illustrated and for the intended aim and objects.
